# EUROPÄISCHE PATENTSCHRIFT

(11) **EP 0 766 015 B1**
(45) Veröffentlichungstag und Bekanntmachung des Hinweises auf die Patenterteilung: **09.12.1998**
(21) Anmeldenummer: 96115194.1
(22) Anmeldetag: 21.09.1996
(51) Int. Cl.: F16C 33/14, B21K 1/76, F16C 11/06

(54) **Verfahren zur Herstellung eines Gelenkgehäuses**
Method of manufacturing a housing of a joint
Procédé de fabrication d'un bottier d'articulation

(30) Priorität: 28.09.1995 DE 19536035
(43) Veröffentlichungstag der Anmeldung: 02.04.1997
(73) Patentinhaber: TRW Fahrwerksysteme GmbH & Co. KG, 40547 Düsseldorf (DE)
(72) Erfinder: Rosenberger Klaus, 47800 Krefeld (DE); Dorth Harald, 40547 Düsseldorf (DE); Stelljes Horst, 40878 Ratingen (DE)
(74) Vertreter: Stenger, Watzke & Ring Patentanwälte

(56) Entgegenhaltungen:
- EP-A- 0 623 408
- WO-A-86/03705
- JP-A-58 112 626
- JP-A-59 010 440
- JP-A-62 084 848
- US-A- 3 897 616
- US-A- 5 129 251
- Vortragstexte des Symposiums "Neue Entwicklungen in der Massivumformung" in Fellbach bei Stuttgart am 13. und 14.06.95, Leitung: Prof.Dr.Ing. Klaus Siegert, Institut für Umformtechnik der Uni
- DIN 8583
- Zeitschriftenartikel: "Grenzen überwinden" aus Maschinenmarkt Würzburg 98 (1992) 1 - Seite 32, ff
- Zeitschriftenartikel: "Nabe einer Fahrzeug-Freilaufkupplung in 7 Arbeitsgängen kaltumformen" aus Maschinenmarkt Würzburg 97 (1991) 33 - Seiten 58 und folgende

## Beschreibung

Die Erfindung betrifft ein Verfahren zur Herstellung eines mit einem angeformten Schaft mit Innengewinde zur Aufnahme eines Axialzapfens versehenen Gelenkgehäuses, insbesondere für Spurstangen von Kraftfahrzeugen, aus einem an einem Ende mit einer kugelartigen Verdickung versehenen, vorzugsweise aus Drahtmaterial hergestellten Rohling.

Zur Herstellung von für Spurstangen von Kraftfahrzeugen bestimmten Gelenkgehäusen ist es in der Praxis bekannt, vorzugsweise aus Drahtmaterial einen Rohling herzustellen, der an einem Ende mit einer kugelartigen Verdickung versehen ist. Nach Erwärmen wird dieser Rohling in mehreren aufeinanderfolgenden Schritten zu einem Gelenkgehäuse mit angeformtem Schaft geschmiedet. Zur Fertigstellung des Gelenkgehäuses ist es erforderlich, nicht nur das Gelenkgehäuse zur Aufnahme einer die zugehörige Gelenkkugel lagernden Lagerschale und eines das Gehäuseinnere verschließenden Deckels aufwendig zu zerspanen, sondern auch zur Einbringung einer mit einem langen Gewindeabschnitt versehenen Axialbohrung zur Aufnahme eines Axialzapfens, mit dessen Hilfe das Gelenkgehäuse an der Spurstange angebracht wird. Neben dem Erwärmen und den aufeinanderfolgenden Schmiedevorgängen ist insbesondere die aufwendige Zerspanung sowohl des Gelenkgehäuses als auch insbesondere des angeformten Schaftes zeitintensiv und teuer.

Ein im wesentlichen aus Kaltumformschritten bestehendes Verfahren, wie es aus dem Dokument EP-A-0 623 408 bekannt ist, ist dagegen erheblich kostengünstiger und erfordert insbesondere einen geringeren Energie- und Materialaufwand

Demgegenüber liegt der Erfindung die **Aufgabe** zugrunde, ein Verfahren der eingangs beschriebenen Art zur Herstellung eines Gelenkgehäuses mit angeformten Schaft zu schaffen, das insbesondere bei der Innengewindeausbildung des Schafts weitere Zeit- und Kosten einsparungen ermöglicht.

Die **Lösung** dieser Aufgabenstellung durch die Erfindung benutzt für die gesamte Herstellung einen Kaltumformprozeß, wobei als erstes durch Napfrückwärtsfließpressen im Schaft des Rohlings eine axiale Vertiefung mit einem den Durchmesser des Innengewindes übersteigenden Durchmesser und einer die axiale Länge des Gewindebereiches übersteigenden Länge hergestellt und anschließend nur der Gewindebereich unter gleichzeitigem Verformen der Mantelfläche zu einer Schlüsselfläche auf den Gewindekerndurchmesser reduziert wird und anschließend durch quer zur Achsrichtung im Bereich der Verdickung erfolgendes Anstauchen, Napfen, Lochen (und damit Abscheren des Materialaustriebes) und Kalibrieren sowohl die Außenkontur als auch die Innenkontur des Gelenkgehäuses hergestellt werden.

Mit dem erfindungsgemäßen, insgesamt ohne Erwärmung auskommenden Verfahren wird einerseits die zeit- und kostenaufwendige Herstellung einer langen Axialbohrung und eines langen Gewindeabschnittes im Schaft des Gelenkgehäuses vermieden, da nur der reduzierte, eine kurze Länge aufweisende Gewindekernbereich mit Innengewinde versehen werden muß, weil die im ersten Verfahrensschritt durch Napfrückwärtsfließpressen hergestellte axiale Vertiefung einen größeren Durchmesser als der Kerndurchmesser hat, so daß die sich in Richtung auf das Gelenkgehäuse an den Gewindebereich anschließende Vertiefung den bei der Befestigung des Gelenkgehäuses an einer Spurstange verwendeten Axialzapfen aufnehmen kann. Andererseits entfällt durch das Kalibrieren des Gelenkgehäuses die bisher erforderliche spanende Bearbeitung sowohl der Innen- als auch der Außenkontur des Gelenkgehäuses, so sich mit dem erfindungsgemäßen Verfahren insgesamt ein erheblich geringerer Fertigungsaufwand ergibt, und zwar bei gleichzeitig reduzierten Kosten und verkürzter Herstellzeit. Im Gegensatz zu den bisher erforderlichen Schmiedevorgängen ist das erfindungsgemäße Verfahren darüber hinaus automatisierbar, so daß die Kosten für die Herstellung von mit einem angeformten Schaft versehenen Gelenkgehäusen erheblich verringert werden können. Außer dem Gewindeschneiden auf erheblich verkürzter Länge ist es beim erfindungsgemäßen Verfahren lediglich noch erforderlich, bei Bedarf eine Ringnut für die Befestigung eines Dichtbalges einzudrehen oder im Bereich des späteren Gehäusedeckels einen ringförmigen Vorsprung anzudrehen, der durch Verstemmen den Gehäusedeckel hält.

Sofern das Gelenkgehäuse nicht symmetrisch zum Schaft angeordnet ist, kann gemäß einem weiteren Merkmal der Erfindung das Gelenkgehäuse durch Kaltumformung seitlich zur Achsrichtung gekröpft werden. Weiterhin ist es erfindungsgemäß möglich, das Gelenkgehäuse zum Abtrag des überschüssigen Materials vorzugsweise im Bereich der Auflage für einen das Gehäuse verschließenden Deckel zu zerspanen.

Wie bereits voranstehend erwähnt, wird beim erfindungsgemäßen Verfahren ausschließlich der durch Reduzieren hergestellte Gewindekerndurchmesser mit Innengewinde versehen. Schließlich ist es erfindungsgemäß möglich, die Gesamtlänge des mit angeformtem Schaft versehenen Gelenkgehäuses durch Plandrehen des Schaftendes exakt mit dem gewünschten Maß herzustellen.

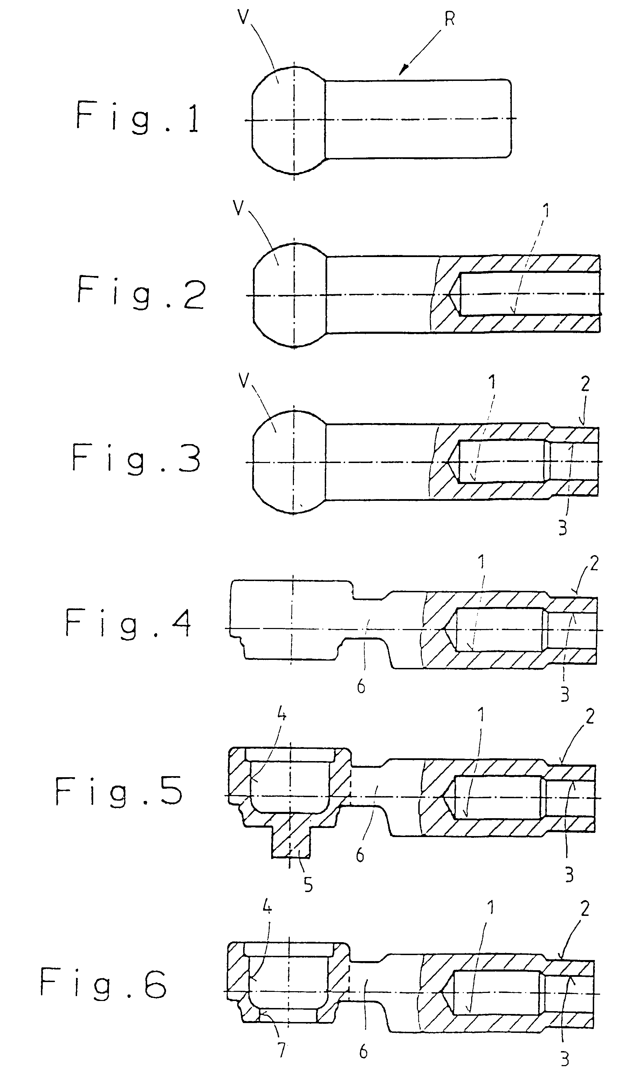

Auf der Zeichnung ist anhand der Fig. 1 bis 11 ein Ausführungsbeispiel des erfindungsgemäßen Verfahrens anhand einzelner Verfahrensschritte dargestellt.

Die Fig. 1 zeigt die Seitenansicht eines durch Stauchen aus Drahtmaterial hergestellten Rohlings R, der an einem Ende mit einer kugelartigen Verdickung V versehen ist.

Durch im kalten Zustand erfolgendes Napfrückwärtsfließpressen wird dieser Rohling R in einem ersten Verfahrensschritt gemäß Fig. 2 mit einer axialen Vertiefung 1 versehen. Der Durchmesser dieser axialen Vertiefung 1 übersteigt hierbei den Durchmesser des Innengewindes, das später zur Aufnahme eines Axialzapfens dient, durch den das Gelenkgehäuse über seinen angeformten Schaft zum Beispiel mit einer Spurstange eines Kraftfahrzeuges verbunden wird. Auch die axiale Länge der Vertiefung 1 ist größer als die Länge des später herzustellenden Innengewindes.

Gemäß Fig. 3 wird anschließend der Gewindebereich des Schaftes hergestellt, indem durch Kaltumformung das Ende des Schaftes einerseits auf seiner Mantelfläche zu einer Schlüsselfläche 2 und andererseits in diesem Bereich der Durchmesser der axialen Vertiefung 1 auf den Gewindekerndurchmesser 3 reduziert werden. Damit sind die Kaltumformungen des Rohlings R im späteren Schaftbereich abgeschlossen.

Zur Herstellung des Gelenkgehäuses wird nunmehr der Rohling R im Bereich seiner kugelartigen Verdickung V quer zur Achsrichtung des Rohlings R in einem oder mehreren Verfahrensschritten gestaucht, um die in Fig. 4 gezeigte Form zu erhalten. Durch Napfen ergibt sich anschließend die in Fig. 5 erkennbare Querschnittskontur für das spätere Gelenkgehäuse, die beim dargestellten Ausführungsbeispiel mit einer gestuften Quervertiefung 4 und einem Materialaustrieb 5 versehen ist. Die Fig. 4 und 5 lassen weiterhin einen Halsabschnitt 6 zwischen dem späteren Gelenkgehäuse und dem angeformten Schaft erkennen.

Gemäß Fig. 6 wird nunmehr das Gelenkgehäuse gelocht, wodurch gleichzeitig der Materialaustrieb 5 abgeschert wird. Das hierbei entstehende Durchgangsloch 7 ist in Fig. 6 deutlich zu erkennen.

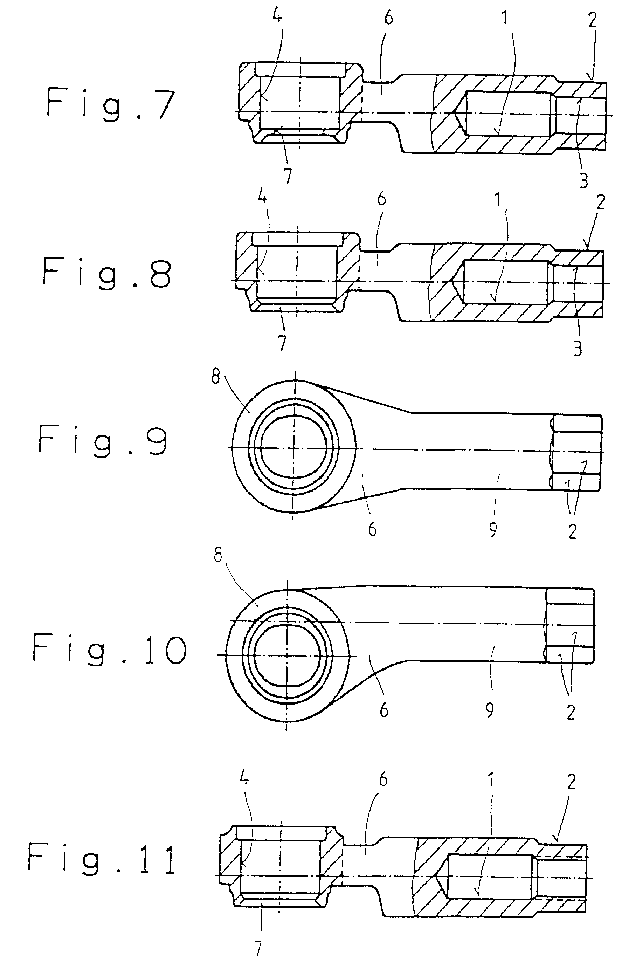

Beim Ausführungsbeispiel erfolgt nunmehr gemäß den Fig. 7 und 8 in zwei Schritten ein Kalibrieren der Außen- und Innenkontur des Gelenkgehäuses. Während sich mit dem ersten Schritt des Kalibriervorganges nach Fig. 7 hierbei ein scharfkantiger Übergang zwischen Quervertiefung 4 und Durchgangsloch 7 ergibt, bewirkt der zweite Kalibrierungsvorgang nach Fig. 8 die fertige Kontur des Gelenkgehäuses auch im Bereich des Durchgangsloches 7.

Wie die Draufsicht in Fig 9 liegt das fertige Gelenkgehäuse 8 mittig auf der Längsachse des Schafts 9, dessen Schlüsselfläche 2 in der Draufsicht nach Fig. 9 gut zu erkennen ist. Sofern eine gekröpfte Anordnung des Gelenkgehäuses 8 zum Schaft 9 gewünscht ist, wird anschließend das Gelenkgehäuse 8 relativ zum Schaft 9 gekröpft, so daß sich eine Ausführungsform gemäß Fig. 10 ergibt.

Zur Fertigstellung des Erzeugnisses ist es gemäß Fig. 11 lediglich erforderlich, im Bereich des Gewindekerndurchmessers 3 Innengewinde in den Schaft 9 einzuschneiden und im Bereich des Gelenkgehäuses 8 durch spanende Bearbeitung die korrekte Auflage für einen das Gelenkgehäuse verschließenden Deckel zu schaffen. Einen Längsschnitt durch das fertige Erzeugnis zeigt Fig. 11.

### Bezugszeichenliste:

- R: Rohling
- V: Verdickung
- 1: axiale Vertiefung
- 2: Schlüsselfläche
- 3: Gewindekerndurchmesser
- 4: Quervertiefung
- 5: Materialaustrieb
- 6: Halsabschnitt
- 7: Durchgangsloch
- 8: Gelenkgehäuse
- 9: Schaft

## Patentansprüche

1. Verfahren zur Herstellung eines mit einem angeformten Schaft (9) mit Innengewinde zur Aufnahme eines Axialzapfens versehenen Gelenkgehäuses (8), insbesondere für Spurstangen von Kraftfahrzeugen, insgesamt durch Kaltumformung aus einem an einem Ende mit einer kugelartigen Verdickung (V) versehenen, vorzugsweise aus Drahtmaterial hergestellten Rohling (R), wobei als erstes durch Napfrückwärtsfließpressen im Schaft des Rohlings (R) eine axiale Vertiefung (1) mit einem den Durchmesser des Innengewindes übersteigenden Durchmesser und einer die axiale Länge des Gewindebereiches übersteigenden Länge hergestellt und anschließend nur der Gewindebereich unter gleichzeitigem Verformen der Mantelfläche zu einer Schlüsselfläche (2) auf den Gewindekerndurchmesser (3) reduziert wird und anschließend durch quer zur Achsrichtung im Bereich der Verdickung (V) erfolgendes Anstauchen, Napfen, Lochen und Kalibrieren sowohl die Außenkontur als auch die Innenkontur des Gelenkgehäuses (8) hergestellt werden.

2. Verfahren nach Anspruch 1, dadurch gekennzeichnet, daß das Gelenkgehäuse (8) durch Kaltumformung seitlich zur Achsrichtung des Schaftes (9) gekröpft wird.

3. Verfahren nach Anspruch 1 oder 2, dadurch gekennzeichnet, daß das Gelenkgehäuse (8) zum Abtrag des überschüssigen Materials vorzugsweise im Bereich der Auflage für einen das Gehäuse verschließenden Deckel zerspant wird.

4. Verfahren nach mindestens einem der Ansprüche 1 bis 3, dadurch gekennzeichnet, daß der durch Reduzieren hergestellte Gewindekerndurchmesser (3) mit Innengewinde versehen wird.

5. Verfahren nach mindestens einem der Ansprüche 1 bis 4, dadurch gekennzeichnet, daß die Gesamtlänge durch Plandrehen des Schaftendes hergestellt wird.

## Claims

1. Method of manufacturing a joint housing (8) provided with an integrally formed shaft (9) having an internal thread for receiving an axial pin, in particular for track rods of motor vehicles, entirely by cold forming from a blank (R) preferably made of wire material and provided at one end with a ball-like enlargement (V), wherein reverse cup extrusion is first used to produce in the shaft of the blank (R) an axial recess (1) of a larger diameter than the diameter of the internal thread and of a length greater than the axial length of the threaded region and then only the threaded region is reduced, with simultaneous deformation of the lateral surface to form a key surface (2), to the thread root diameter (3) and then by effecting, at right angles to the axial direction in the region of the enlargement (V), upsetting, dishing, holing and sizing both the external contour and the internal contour of the joint housing (8) are produced.

2. Method according to claim 1, characterized in that the joint housing (8) is offset laterally relative to the axial direction of the shaft (9) by cold forming.

3. Method according to claim 1 or 2, characterized in that the joint housing (8) for removal of the surplus material is machine-cut preferably in the region of the support for a cover which closes the housing.

4. Method according to at least one of claims 1 to 3, characterized in that the thread root diameter (3) produced by reduction is provided with an internal thread.

5. Method according to at least one of claims 1 to 4, characterized in that the overall length is produced by facing of the shaft end.

## Revendications

1. Procédé de fabrication d'un boîtier d'articulation (8), pourvu d'un arbre, formé dessus (9), avec un filetage intérieur qui sert à recevoir un tenon axial, en particulier pour des barres d'accouplement de véhicules à moteur, obtenu au total par déformation à froid à partir d'une ébauche (R), pourvue à une extrémité d'une surépaisseur (V) en forme de sphère, et fabriqué de préférence en une matière faite de fil métallique, procédé dans lequel on fabrique en premier, par extrusion à rebours de godet dans l'arbre de l'ébauche (R), un renfoncement axial (1), d'un diamètre qui dépasse le diamètre du filetage intérieur et d'une longueur qui dépasse la longueur axiale de la zone du filetage et ensuite on ne réduit au diamètre du fond de filet (3) que la zone du filetage en déformant en même temps la surface enveloppe pour en faire une surface de clé (2), et ensuite on réalise aussi bien le contour extérieur que le contour intérieur du boîtier d'articulation (8) au moyen d'un refoulement, d'une formation de godet, de trou et d'un calibrage se produisant perpendiculairement à la direction axiale dans la zone de la surépaisseur (V).

2. Procédé selon la revendication 1, caractérisé en ce que le boîtier d'articulation (8) est coudé par déformation à froid latéralement par rapport à la direction axiale de l'arbre (9).

3. Procédé selon la revendication 1 ou 2, caractérisé en ce que le boîtier d'articulation (8) est usiné pour enlever la matière en excès de préférence dans la zone d'appui prévue pour recevoir un couvercle qui ferme le boîtier.

4. Procédé selon au moins l'une des revendications 1 à 3, caractérisé en ce que la circonférence (3) à fond de filet, réalisée par réduction, est pourvue d'un filetage intérieur.

5. Procédé selon au moins l'une des revendications 1 à 4, caractérisé en ce que la longueur totale est réalisée par tournage transversal de l'extrémité de l'arbre.
